# EUROPEAN PATENT SPECIFICATION

(11) **EP 3 699 349 B1**
(45) Date of publication and mention of the grant of the patent: **10.04.2024**
(21) Application number: 19158270.9
(22) Date of filing: 20.02.2019
(51) Int. Cl.: A47L 15/42, D06F 34/28

(54) **SYSTEM COMPRISING A PROGRAM-CONTROLLED DOMESTIC APPLIANCE AND A WIRELESS TERMINAL, METHOD FOR OPERATING SAID SYSTEM AND COMPUTER READABLE MEDIUM TO PERFORM SAID METHOD**
SYSTEM MIT EINEM PROGRAMMGESTEUERTEN HAUSHALTSGERÄT UND EINEM DRAHTLOSEN ENDGERÄT, VERFAHREN ZUM BETRIEB DIESES SYSTEMS UND COMPUTERLESBARES MEDIUM ZUR DURCHFÜHRUNG DIESES VERFAHREN
SYSTÈME COMPRENANT UN APPAREIL DOMESTIQUE CONTRÔLÉ PAR UN PROGRAMME ET UN TERMINAL SANS FIL, MÉTHODE POUR FAIRE FONCTIONNER CE SYSTÈME ET SUPPORT LISIBLE PAR ORDINATEUR POUR EXÉCUTER CETTE MÉTHODE

(43) Date of publication of application: 26.08.2020
(73) Proprietor: BSH Hausgeräte GmbH, 81739 München (DE)
(72) Inventor: Cabaleiro Martins, Marcelo, 13629 Berlin (DE); Gorzitza, Burkhard, 13158 Berlin (DE); Mühl, Jürgen, 10439 Berlin (DE); Stößel, Christian, 10437 Berlin (DE)

(56) References cited:
- EP-A1- 2 628 841
- EP-A2- 1 336 681
- WO-A1-2008/006671
- WO-A1-2009/132953
- CN-A- 106 225 157
- CN-B- 103 279 203
- DE-A1-102009 047 466
- DE-A1-102017 202 936
- US-A1- 2004 154 060
- US-A1- 2006 036 970

## Description

### TECHNICAL FIELD

The disclosure relates to a program-controlled domestic appliance and a method for operating such a program-controlled domestic appliance. The disclosure particularly relates to a program-controlled domestic appliance with simplified user interface for receiving a user interaction for controlling the appliance.

### BACKGROUND

For program-controlled domestic appliances such as a laundry treating machine (washing machine or dryer) or, if necessary, electric cookers or ovens, generally a factory-made predetermined program is executed. In the case of a washing machine, the program is partly selected by entering laundry-related data, such as type of laundry, degree of soiling, filling quantity, which are generally requested from the user by light indicators etc. The user-initiated changes and/or additions of programs are then finally stored. The program control then effects that, based on the inputs provided by the user, after pressing a start button, a suitable program of the stored programs is selected.

I.e., the user has to perform a number of user actions to start a certain washing/drying program. In the simplest case, the user has to perform the following sequence: 1) select a memory program; and 2) Start the selected memory program.

Publication WO 2008/006671 A1 discloses a program-controlled domestic appliance.

United States patent application publication US 2006/0036970 A1 discloses a system for configuring and controlling home appliances.

European patent application EP 2 628 841 A1 discloses a method and device for quickly turning on and activating a household appliance belonging to the white good category.

European patent application EP 1 336 681 A2 discloses a program-controlled domestic appliance.

Document CN 106 225 157 A discloses a button control method for an air-conditioner, wherein the air-conditioner has several command buttons and an emergency command button simulating the function of other buttons.

### SUMMARY OF THE INVENTION

It is the object of the present invention to provide a solution for an easier activation of a program-controlled domestic appliance, in particular a solution with a shortened user interaction sequence to be performed by the user when activating the program-controlled domestic appliance.

The foregoing and other objects are achieved by the subject matter of the independent claims. Further implementation forms are apparent from the dependent claims, the description and the figures.

The disclosure is based on the concept of a novel user interface for receiving user interactions from a user to operate a program-controlled domestic appliance. The user interface is based on a reduced number of user actions the customer has to perform to start a certain washing/drying program. The disclosed solution also works with extremely reduced user interfaces (e. g. one-button user interface, UI).

The appliances and devices described hereinafter may be of various types. For example, program-controlled domestic or home appliances may include washing machines, dishwashers, clothes dryers, drying cabinets, freezers, refrigerators, kitchen stoves, water heaters, trash compactors, microwave ovens, induction cookers, etc. The individual control elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

According to a first aspect the invention relates to a system comprising a program-controlled domestic appliance and a wireless terminal, wherein the program-controlled domestic appliance is operated on the basis of a one-button user interface, the program-controlled domestic appliance comprising: a memory configured to store a plurality of memory programs for operating the domestic appliance according to specific configurations; a user interface configured to receive a user interaction initiated by a user, the user interaction indicating at least one memory program of the plurality of memory programs; and a controller, configured to control operation of the domestic appliance according to the at least one memory program indicated by the user interaction, wherein the controller is configured to call the at least one memory program from the memory and to start the called memory program responsive to the same user interaction initiated by the user, wherein the user interface is configured to indicate a user-initiated selection of the at least one memory program from the plurality of memory programs, the program-controlled domestic appliance comprising: a button, configured to implement the user interface, wherein the button is configured to indicate the user-initiated selection of the at least one memory program based on a time interval between pressing down the button and releasing the button, wherein a first time interval corresponds to a first favorite memory program; and wherein further time intervals correspond to further favorite memory programs, wherein the button is electronically emulated by an application, App, running on the wireless terminal.

This provides the advantage that the user can save his favorite program as one of the memory programs. That means, once the user has saved this program with its desired settings (e.g. temperature, speed, rinse cycles, etc.) next time when he wants to run this specific saved program, he does not have to check the settings again because it was saved according to his desired settings. That is why, in this specific case, calling the program can make it start already: no need to check the settings because it was saved originally by the user.

By calling the at least one memory program from the memory and starting the called memory program responsive to the same user interaction initiated by the user, the user interaction sequence can be reduced to a single interaction, thereby allowing a very easy activation of the program-controlled domestic appliance by the user. The domestic appliance can also be operated on the basis of extremely reduced user interfaces such as a one-button user interface (Ul). By combining the "call memory program" and "start memory program" to a single function (single button function), the user interaction sequence can be shortened down to a single interaction.

In an exemplary implementation form of the program-controlled domestic appliance, the controller is configured to call the at least one memory program from the memory and to start the called memory program responsive to a single user interaction initiated by the user.

Normally, the user needs three interactions: Call the program, verify/adjust the settings (e.g. temperature, spin speed, etc.), start the program. But here, as the user is calling a memory program that he has saved on his own, it means the settings were also saved according to the user's wishes. Then, when calling this memory program, it is not needed to vary/adjust the settings because they were saved by the user. That is why, calling and starting it can be done immediately without any other interaction.

Thus, implementation effort for design of the user interface can be reduced and ease of use can be improved.

According to the invention, the user interface is configured to indicate a user-initiated selection of the at least one memory program from the plurality of memory programs.

This means that the user can input and/or indicate a desired memory program, e.g. one of his/her favorite programs when using the user interface.

This provides the advantage that the user interface includes multiple functionalities, the user can select his desired memory program, call this memory program from a plurality of memory programs stored in the memory and start this memory time by a single user interaction. The user can also change the settings of the program and save it.

According to theinvention, the program-controlled domestic appliance comprises a button, configured to implement the user interface.

The button is a single button or a multi-function button. The button can be configured to activate a favorite memory program. Such favorite memory program may have been pre-selected or may be pre-defined or may be pre-installed or pre-configured.

This provides the advantage that a single button can be used to select the desired memory program, call this memory program from a plurality of memory programs stored in the memory and start this memory time by a single activation of the button.

In an exemplary implementation form of the program-controlled domestic appliance, the called memory program is started upon a release of the button.

This provides the advantage that the two states of the button which are "pressed down" and "released" can be optimally exploited for starting the called memory program. When the called memory program is started upon a release of the button, there is still free functionality for the state of "pressing down" the button. For example, when pressing down the button, a display can display the called memory program, e.g. the settings or configuration applied by the called memory program, before it is started by the user. Alternatively, a signal can be transmitted such as a beep when pressing down the button to signal the user that the called memory program will be activated when releasing the button.

In an exemplary implementation form of the program-controlled domestic appliance, the program-controlled domestic appliance comprises a display configured to display a configuration of the at least one memory program indicated by the user interaction upon pressing down the button.

This provides the advantage that the user can display the current configuration. Such a configuration may include for example maximum temperature, temperature over time, required overall time, rotation speed, etc.

In the program-controlled domestic appliances that are currently in series, the user can call the favorite program, verify/adjust the settings and start the program. With this new idea described in this disclosure, the part of verification/adjustment can be removed because the favorite program with its settings was saved by the user himself. So, the program-controlled domestic appliance according to this disclosure provides the technical advantage that there is no need to verify something that the user has already adjusted in the first place.

According to the invention, the button is configured to indicate the user-initiated selection of the at least one memory program based on a time interval between pressing down the button and releasing the button.

This provides the advantage that the button can have multi-functionality depending on the length of the time interval. For example, when releasing the button after a first time interval, a first functionality may be applied, when releasing the button after a second time interval, a second functionality may be applied, etc.

According to the invention, a first time interval corresponds to a first favorite memory program; and further time intervals correspond to further favorite memory programs.

This provides the advantage that multiple memory programs can be activated by a single button.

In an exemplary implementation form of the program-controlled domestic appliance, the program-controlled domestic appliance comprises a signal transmitter configured to transmit an acoustical, visual or haptical signal after expiration of the first time interval and after expiration of each of the further time intervals.

This provides the advantage that the user can be efficiently informed about an expiration of the diverse time intervals and hence knows which of his favorite memory programs is activated when releasing the button.

In an exemplary implementation form of the program-controlled domestic appliance, the button is configured to indicate the user-initiated selection of the at least one memory program based on an operational state of the domestic appliance, in particular based on the following operational states: appliance off, appliance on, appliance running.

This provides the advantage that the button can have a different functionality depending on the operational state of the appliance. For example, the same button can be used to start the appliance (when the appliance is in off state) and to stop the appliance (when the appliance is in on state or running state). Thus, the user can operate the appliance in an easy and comfortable manner by using a single button.

According to the present invention, the button is electronically emulated by an application (App) running on a wireless terminal. This provides the advantage that the program-controlled domestic appliance can be remotely controlled, e.g. by using an App running on a smartphone or tablet computer, etc. The App can be easily implemented since a single button emulated by the App is sufficient for controlling the program-controlled domestic appliance.

In an exemplary implementation form of the program-controlled domestic appliance, the program-controlled domestic appliance comprises a voice interface, configured to implement the user interface, wherein the called memory program is started upon reception of a specific voice command by the voice interface.

This provides the advantage that a single voice command can be used to call the memory program and start the memory program in a comfortable and easy manner.

According to a second aspect of the invention, the invention relates to a method for operating a system according to the first aspect of the present invention, wherein the system comprises a program-controlled domestic appliance and a wireless terminal, wherein the program-controlled domestic appliance is operated on the basis of a one-button user interface, wherein a button of the program-controlled domestic appliance is electronically emulated by an application, App, running on the wireless terminal, the method comprising: receiving a user interaction initiated by a user, the user interaction indicating at least one memory program of the plurality of memory programs; and controlling operation of the domestic appliance according to the at least one memory program indicated by the user interaction, wherein the controlling comprises calling the at least one memory program from the memory and starting the called memory program responsive to the same user interaction initiated by the user, indicating a user-initiated selection of the at least one memory program from the plurality of memory programs by the user interface, indicating the user-initiated selection of the at least one memory program based on a time interval between pressing down the button and releasing the button by the button, wherein a first time interval corresponds to a first favorite memory program; and wherein further time intervals correspond to further favorite memory programs.

This provides the advantage that the user can save his favorite program as one of the memory programs. That means, once the user has saved this program with its desired settings (e.g. temperature, speed, rinse cycles, etc.) next time when he wants to run this specific saved program, he does not have to check the settings again because it was saved according to his desired settings. That is why, in this specific case, calling the program can make it start already: no need to check the settings because it was saved originally by the user.

The favorite program is a program and its settings chosen by the user to save as "short cut" button. So, the user can at any time start his favorite program which is the one he has saved himself (with the settings). That is why it is not needed to verify the settings anymore.

According to a third aspect, the invention relates to a computer readable non-transitory medium on which instructions are stored which when executed by a controller of a domestic appliance according to the first aspect of the invention causes the system of the first aspect of the invention cause the computer to perform the method according to the second aspect of the invention.

Embodiments of the invention can be implemented in hardware and/or software.

The solution described above provides the following advantages: The solution may be applied in existing washer/dryer/washdryer appliances. These appliances will then support a simpler version to recall and start a memory /favorite program. By combining the switch/on, recall and start of a program to a single button press, the user interaction is minimized, and appliance control panels can be extremely simplified (up to the point where only a single button if offered). Control panel costs can be saved by stripping down the interface to a minimum set of interaction elements.

### BRIEF DESCRIPTION OF THE DRAWINGS

Further embodiments of the invention will be described with respect to the following figures, wherein:
Fig. 1 shows a schematic diagram 100 illustrating a program-controlled domestic appliance according to the disclosure;
Fig. 2a shows a schematic diagram 200a illustrating a button 220 of a program-controlled domestic appliance 100 according to the disclosure and an exemplary functionality of the button 220 when the appliance is turned off;
Fig. 2b shows a schematic diagram 200b illustrating a button 220 of a program-controlled domestic appliance 100 according to the disclosure and an exemplary functionality of the button 220 when the appliance is turned on;
Fig. 2c shows a schematic diagram 200c illustrating a button 220 of a program-controlled domestic appliance 100 according to the disclosure and an exemplary functionality of the button 220 when the appliance is running; and
Fig. 3 shows a schematic diagram illustrating an exemplary method 300 for operating a program-controlled domestic appliance 100 according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

In the following, program-controlled domestic or home appliances are described such as washing machines, dishwashers, clothes dryers, drying cabinets, freezers, refrigerators, kitchen stoves, water heaters, trash compactors, microwave ovens, induction cookers, etc.

Domestic or home appliances are electrical/mechanical machines which accomplish some household functions, such as cooking, cleaning, or food preservation. Home appliances can be divided into three classifications, which include: Major appliances, Small appliances, Consumer electronics. Given a broad usage, the domestic application attached to "home appliance" is tied to the definition of appliance as "an instrument or device designed for a particular use or function". More specifically, "home appliance" can be defined as: "devices or machines, usually electrical, that are in your home and which you use to do jobs such as cleaning or cooking." The broad usage, afforded to the definition allows for nearly any device intended for domestic use to be a home appliance, including consumer electronics as well as stoves, refrigerators, toasters and air conditioners to light bulbs and water well pumps.

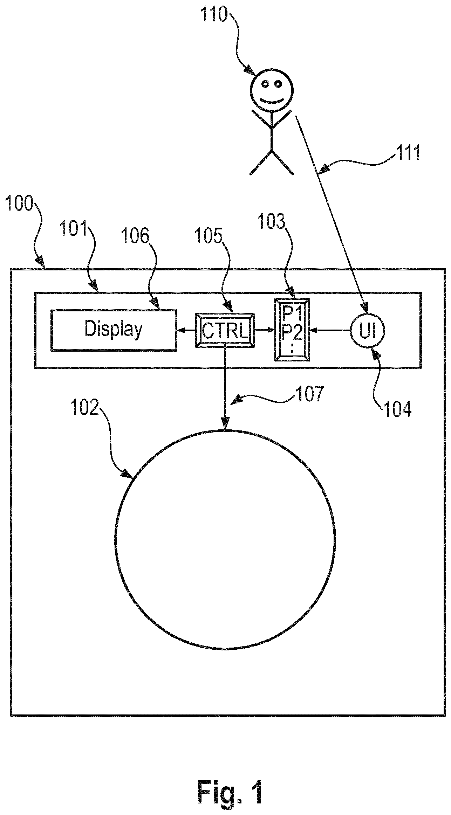

Fig. 1 shows a schematic diagram 100 illustrating a program-controlled domestic appliance according to the disclosure. The program-controlled domestic appliance 100 comprises a memory 103 configured to store a plurality of memory programs P1, P2, ... for operating the domestic appliance 100 according to specific configurations. The program-controlled domestic appliance 100 comprises a user interface 104 configured to receive a user interaction 111 initiated by a user 110. The user interaction 111 indicates at least one memory program of the plurality of memory programs P1, P2, .... For example, the user interface 104 may indicate only one memory program, e.g. a user's favorite memory program, that shall be activated. Alternatively, more than one memory programs may be indicated that shall be operated sequentially or in parallel, e.g. a pre-washing program and a main washing program.

The program-controlled domestic appliance 100 further comprises a controller 105 configured to control 107 operation of the domestic appliance 100 according to the at least one memory program indicated by the user interaction 111. The controller 105 is configured to call the at least one memory program from the memory 103 and to start the called memory program responsive to the same user interaction 111 initiated by the user 110. The controller 105 may for example start an engine or actuators 102 of the program-controlled domestic appliance 100, e.g. an electric drive or an electrical actuator according to the at least one memory program.

The controller 105 may be configured to call the at least one memory program from the memory 103 and to start the called memory program responsive to a single user interaction 111 initiated by the user 100.

The user interface 104 may be configured to indicate a user-initiated selection of the at least one memory program from the plurality of memory programs P1, P2, ... For example, activation of memory program P1 shall be indicated.

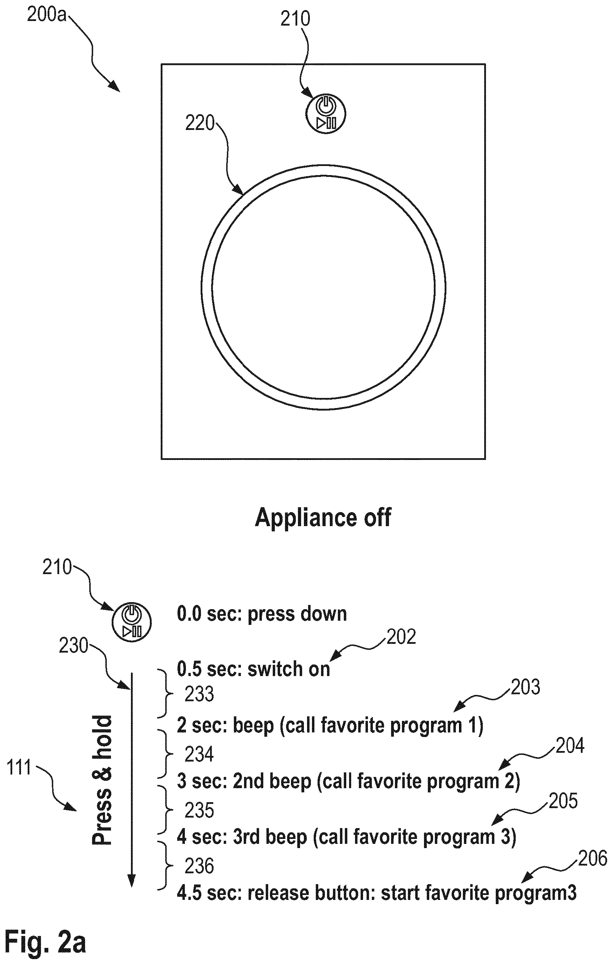

The program-controlled domestic appliance 100 may comprise a button, e.g. a button 220 as described below with respect to Figures 2a to 2c, configured to implement the user interface 104. The called memory program may be started upon a release of the button 220, e.g. as described below with respect to Figures 2a to 2c.

The program-controlled domestic appliance 100 may comprise a display 106 that is configured to display a configuration of the at least one memory program indicated by the user interaction 111 upon pressing down the button 220.

The button 220 may be configured to indicate the user-initiated selection of the at least one memory program based on a time interval 230 between pressing down the button 220 and releasing the button 220. For example, a first time interval 233 may correspond to a first favorite memory program 203 and further time intervals 234, 235, 236 may correspond to further favorite memory programs 204, 205, 206.

The program-controlled domestic appliance 100 may comprise a signal transmitter to transmit an acoustical, visual or haptical signal after expiration of the first time interval 233 and after expiration of each of the further time intervals 234, 235, 236. Such a signal transmitter may be a small loudspeaker, a beeper, a light, an LED, a vibration device, etc.

The button 220 may be configured to indicate the user-initiated selection of the at least one memory program based on an operational state of the domestic appliance 100, e.g. based on the following operational states: appliance off 200a, appliance on 200b, appliance running 200c as shown below with respect to Figures 2a to 2c.

The button 220 may be electronically emulated by an application (App) running on a wireless terminal, e.g. a Smartphone or a tablet computer.

In an implementation form, the program-controlled domestic appliance 100 may comprise a plurality of buttons 220, configured to implement the user interface 111. Each button of the plurality of buttons 220 may be configured to start a respective favorite memory program 203, 204, 205, 206 upon release of the respective button, e.g. as described below with respect to Figures 2a to 2c.

In an implementation form, the program-controlled domestic appliance 100 may comprise a voice interface to implement the user interface 104. The called memory program can be started upon reception of a specific voice command by the voice interface.

The program-controlled domestic appliance 100 can be operated by a single function and user interaction initiating that function. By combining the "call memory program" and "start memory program" to a single button function, the user interaction sequence can be shortened down to a single interaction.

For normal programs, between the selection of a specific laundry treatment program and the starting of a program, the user may have a wish for adaption of parameters and configuration to their likings. For memory programs, however, it can be assumed that the program is already saved with the needed adaptions compared to the default settings and a configuration time window between selection and start is no longer needed.

In an implementation form, the program shall be started upon button release, so that the user has the possibility to check (if available) the settings on the displays before he acknowledges the program start. Any other interaction while holding down the button may cancel the start. If the button that activates and starts the memory program is the same that switches the appliance on and off, another user interaction may be saved. The function may depend on the time the On/Off button is pressed, e.g. as described below with respect to Figures 2a to 2c.

Fig. 2a shows a schematic diagram 200a illustrating a button 220 of a program-controlled domestic appliance 100 according to the disclosure and an exemplary functionality of the button 220 when the appliance is turned off.

Fig. 2a is an example for operating the domestic appliance 100 by a button 220 when the appliance is in the operational state "off". The button 220 can be pressed down and released. Depending on the time interval 230 of pressing and holding 111 the button 220, different functionalities can be assigned to the button 220 as described in the following:
- On/Off/Start button 220 shortly pressed, e.g. between 0.0s and 0.5sec -> Appliance is turned on 202.
- On/Off/Start button 220 pressed between 0,5s and 2s, i.e. within a first time interval 233

-> Already saved memory program 1 is called 203 and started upon release of the button 220 which may be between 2s and 3s.

More than one memory program can be called and activated based on the time the button 220 is pressed. E.g., a pressing of the button 220 between 2 and 3 seconds, i.e. within a second time interval 234, can call memory program 2 and start it upon release of the button 220 which may be between 3s and 4s; a pressing of the button 220 between 3 and 4 seconds, i.e. within a third time interval 235, can call memory program 3 and start it upon release of the button 220 which may be between 4s and 5s, e.g. after 4.5 seconds. An acoustic signal can assist the user to signal when he can release the button 220.

A sign 210 may be attached on the home appliance 100 close to the button 220 to indicate functionality of the button 220. The sign 210 shown in Figures 2a to 2c indicates power on/power off as well as start/stop functionality.

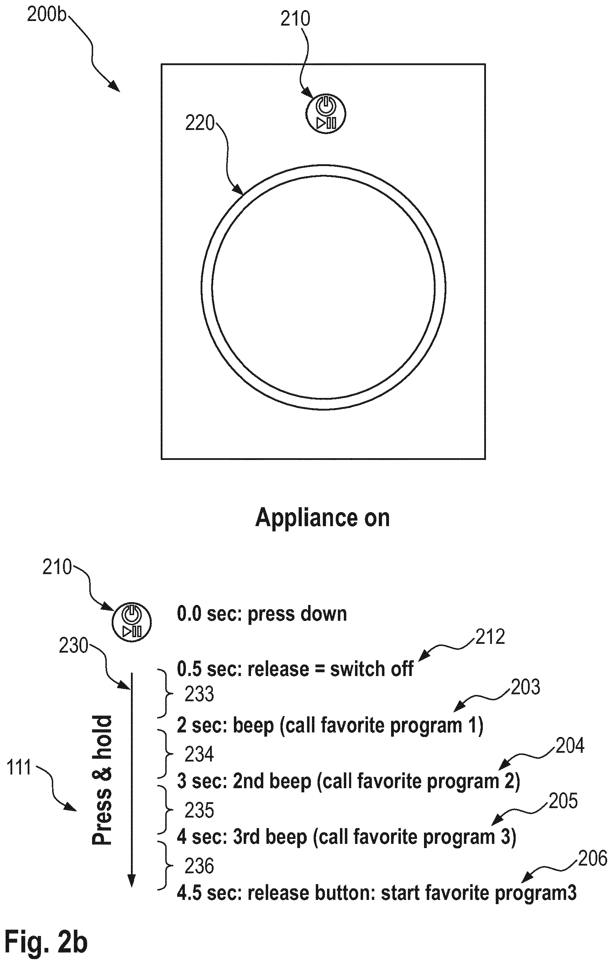

Fig. 2b shows a schematic diagram 200b illustrating a button 220 of a program-controlled domestic appliance 100 according to the disclosure and an exemplary functionality of the button 220 when the appliance is turned on.

Fig. 2b is an example for operating the domestic appliance 100 by a button 220 when the appliance is in the operational state "on". The button 220 can be pressed down and released. Depending on the time interval 230 of pressing and holding 111 the button 220, different functionalities can be assigned to the button 220 as described in the following:
- On/Off/Start button 220 shortly pressed, e.g. between 0.0s and 0.5sec -> Appliance is turned off 212.
- On/Off/Start button 220 pressed between 0,5s and 2s, i.e. within a first time interval 233

-> Already saved memory program 1 is called 203 and started upon release of the button 220 which may be between 2s and 3s.

More than one memory program can be called and activated based on the time the button 220 is pressed. E.g., a pressing of the button 220 between 2 and 3 seconds, i.e. within a second time interval 234, can call memory program 2 and start it upon release of the button 220 which may be between 3s and 4s; a pressing of the button 220 between 3 and 4 seconds, i.e. within a third time interval 235, can call memory program 3 and start it upon release of the button 220 which may be between 4s and 5s, e.g. after 4.5 seconds. An acoustic signal can assist the user to signal when he can release the button 220.

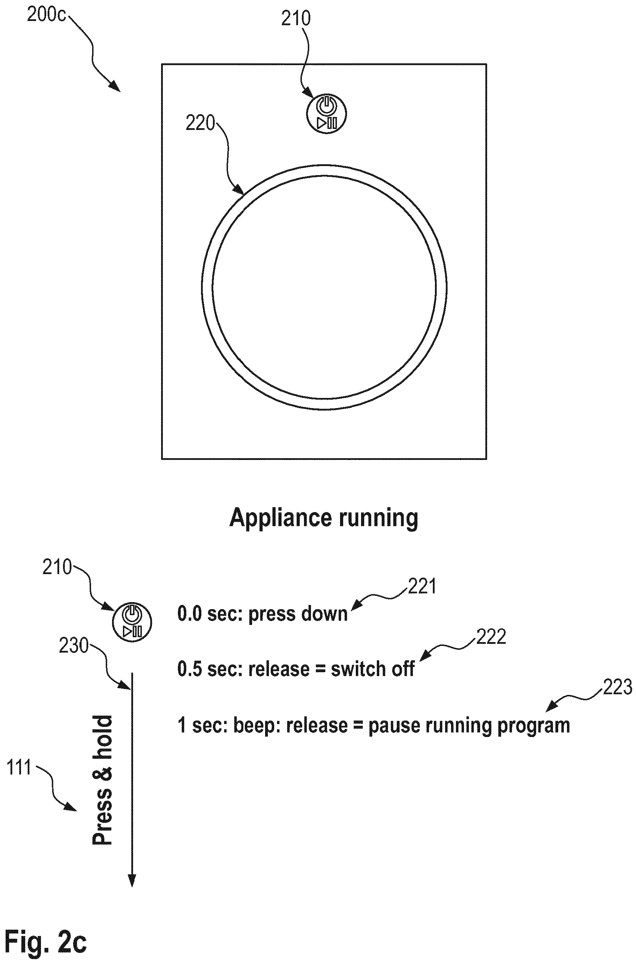

Fig. 2c shows a schematic diagram 200c illustrating a button 220 of a program-controlled domestic appliance 100 according to the disclosure and an exemplary functionality of the button 220 when the appliance is running.
- On/Off/Start button 220 shortly pressed -> Appliance is turned off 222.
- On/Off/Start button pressed between 0,5s and 1s or longer-> Pause running program 223 initiated. An acoustic signal can assist the user to signal when he can release the button. The acoustic signal indicates the pause.

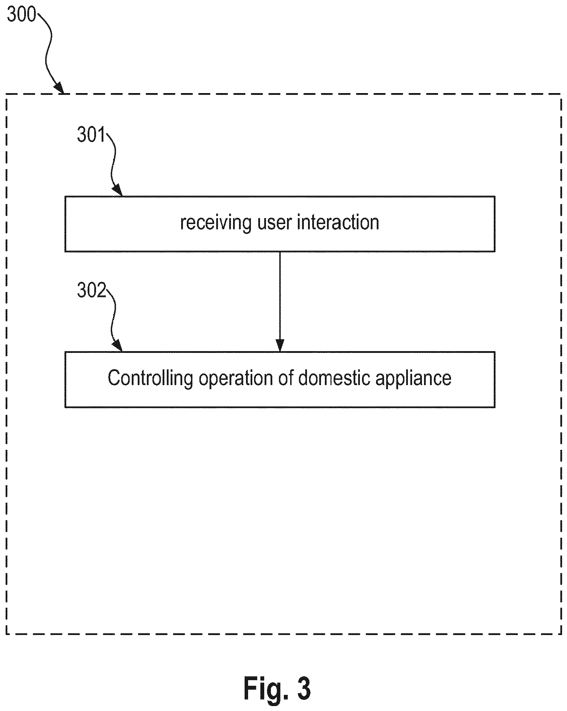

Fig. 3 shows a schematic diagram illustrating an exemplary method 300 for operating a program-controlled domestic appliance 100 according to the disclosure. The method 300 may be used to operate the program-controlled domestic appliance 100 as described above with respect to Figure 1 which comprises a memory 103 for storing a plurality of memory programs P1, P2, ... for operating the domestic appliance 100 according to specific configurations.

The method 300 comprises receiving 301 a user interaction 111 initiated by a user 110, the user interaction 111 indicating at least one memory program of the plurality of memory programs P1, P2, ...

The method 300 comprises controlling 302 operation of the domestic appliance 100 according to the at least one memory program indicated by the user interaction 111, wherein the controlling 302 comprises calling the at least one memory program from the memory 103 and starting the called memory program responsive to the same user interaction 111 initiated by the user 110.

Another aspect of the disclosure is related to a computer program product comprising program code for performing the methods and procedures or the functionalities described above, when executed on a computer or a processor. The method may be implemented as program code that may be stored on a non-transitory computer medium. The computer program product may implement the techniques described above. Another aspect of the disclosure is related to a computer readable non-transitory medium on which computer instructions are stored which when executed by a computer cause the computer to perform the method 300 as described above.

## Claims

1. A system comprising a program-controlled domestic appliance (100) and a wireless terminal, wherein the program-controlled domestic appliance (100) is operated on the basis of a one-button user interface (104), the program-controlled domestic appliance (100) comprising:
a memory (103) configured to store a plurality of memory programs (P1, P2) for operating the domestic appliance (100) according to specific configurations;
the user interface (104) configured to receive a user interaction (111) initiated by a user (110), the user interaction (111) indicating at least one memory program of the plurality of memory programs (P1, P2); and
a controller (105), configured to control (107) operation of the domestic appliance (100) according to the at least one memory program indicated by the user interaction (111),
wherein the controller (105) is configured to call the at least one memory program from the memory (103) and to start the called memory program responsive to the same user interaction (111) initiated by the user (110), wherein the user interface (104) is configured to indicate a user-initiated selection of the at least one memory program from the plurality of memory programs (P1, P2), the program-controlled domestic appliance (100) comprising: a button (220), configured to implement the user interface (104), wherein the button (220) is configured to indicate the user-initiated selection of the at least one memory program based on a time interval (230) between pressing down the button (220) and releasing the button (220), **characterized in that** a first time interval (233) corresponds to a first favorite memory program (203); and wherein further time intervals (234, 235, 236) correspond to further favorite memory programs (204, 205, 206);
wherein the button (220) is electronically emulated by an application, App, running on the wireless terminal.

2. The system of claim 1,
wherein the controller (105) is configured to call the at least one memory program from the memory (103) and to start the called memory program responsive to a single user interaction (111) initiated by the user (100).

3. The system of claim 1 or 2,
wherein the called memory program is started upon a release of the button (220).

4. The system of one of claims 1 to 3, wherein the program-controlled domestic appliance (100) comprises:
a display (106) configured to display a configuration of the at least one memory program indicated by the user interaction (111) upon pressing down the button (220).

5. The system of one of claims 1 to 4, wherein the program-controlled domestic appliance (100) comprises:
a signal transmitter configured to transmit an acoustical, visual or haptical signal after expiration of the first time interval (233) and after expiration of each of the further time intervals (234, 235, 236).

6. The system of one of claims 1 to 5,
wherein the button (220) is configured to indicate the user-initiated selection of the at least one memory program based on an operational state of the domestic appliance (100), in particular based on the following operational states: appliance off (200a), appliance on (200b), appliance running (200c).

7. A method (300) for operating a system according to one of claims 1 to 6, wherein the system comprises a program-controlled domestic appliance (100) and a wireless terminal, wherein the program-controlled domestic appliance (100) is operated on the basis of a one-button user interface (104), wherein a button (220) of the program-controlled domestic appliance (100) is electronically emulated by an application, App, running on the wireless terminal, the method (300) comprising:
receiving (301) a user interaction (111) initiated by a user (110), the user interaction (111) indicating at least one memory program of the plurality of memory programs (P1, P2); and
controlling (302) operation of the domestic appliance (100) according to the at least one memory program indicated by the user interaction (111),
wherein the controlling (302) comprises calling the at least one memory program from the memory (103) and starting the called memory program responsive to the same user interaction (111) initiated by the user (110),
indicating a user-initiated selection of the at least one memory program from the plurality of memory programs (P1, P2) by the user interface (104),
indicating the user-initiated selection of the at least one memory program based on a time interval (230) between pressing down the button (220) and releasing the button (220) by the button (220), **characterized in that** a first time interval (233) corresponds to a first favorite memory program (203); and wherein further time intervals (234, 235, 236) correspond to further favorite memory programs (204, 205, 206).

8. A computer readable non-transitory medium on which instructions are stored which when executed by a controller of a domestic appliance according to claim 1 causes the system of claim 1 to perform the method (300) of claim 7.

## Patentansprüche

1. System, das ein programmgesteuertes Haushaltsgerät (100) und ein drahtloses Endgerät umfasst, wobei das programmgesteuerte Haushaltsgerät (100) auf der Grundlage einer aus einer Taste bestehenden Benutzerschnittfläche (104) betrieben wird, wobei das programmgesteuerte Haushaltsgerät (100) Folgendes umfasst:
einen Speicher (103), der so konfiguriert ist, dass er mehrere Speicherprogramme (P1, P2) für das Betreiben des Haushaltsgeräts (100) gemäß bestimmten Konfigurationen speichert,
die Benutzerschnittstelle (104), die so konfiguriert ist, dass sie eine von einem Benutzer (110) ausgelöste Benutzerinteraktion (111) empfängt, die mindestens eines der mehreren Speicherprogramme (P1, P2) angibt, und
eine Steuerung (105), die so konfiguriert ist, dass sie den Betrieb des Haushaltsgeräts (100) dem durch die Benutzerinteraktion (111) angegebenen mindestens einen Speicherprogramm entsprechend steuert (107),
wobei die Steuerung (105) so konfiguriert ist, dass sie das mindestens ein Speicherprogramm aus dem Speicher (103) abruft und als Reaktion auf die gleiche von dem Benutzer (110) ausgelöste Benutzerinteraktion (111) das abgerufene Speicherprogramm startet, wobei die Benutzerschnittstelle (104) so konfiguriert ist, dass sie eine vom Benutzer ausgelöste Auswahl des mindestens einen unter den mehreren Speicherprogrammen (P1, P2) angibt, wobei das programmgesteuerte Haushaltsgerät (100) Folgendes umfasst: eine Taste (220), die so konfiguriert ist, dass sie die Benutzerschnittstelle (104) implementiert, wobei die Taste (220) so konfiguriert ist, dass sie die vom Benutzer ausgelöste Auswahl des mindestens einen Speicherprogramms auf der Grundlage eines Zeitraums (230) zwischen dem Drücken und dem Loslassen der Taste (220) angibt, **dadurch gekennzeichnet, dass** ein erster Zeitraum (233) einem ersten bevorzugten Speicherprogramm (203) entspricht, und wobei weitere Zeiträume (234, 235, 236) weiteren bevorzugten Speicherprogrammen (204, 205, 206) entsprechen,
wobei die Taste (220) von einer Anwendung App, die auf dem drahtlosen Endgerät läuft, elektronisch emuliert wird.

2. System nach Anspruch 1,
wobei die Steuerung (105) so konfiguriert ist, dass sie das mindestens eine Speicherprogramm aus dem Speicher (103) abruft und als Reaktion auf eine einzige von dem Benutzer (100) ausgelöste Benutzerinteraktion (111) das abgerufene Speicherprogramm startet.

3. System nach Anspruch 1 oder 2,
wobei das abgerufene Speicherprogramm nach einem Loslassen der Taste (220) gestartet wird.

4. System nach einem der Ansprüche 1 bis 3, wobei das programmgesteuerte Haushaltsgerät (100) Folgendes umfasst:
eine Anzeige (106), die so konfiguriert ist, dass sie nach dem Drücken der Taste (220) eine Konfiguration des mindestens einen durch die Benutzerinteraktion (111) angegebenen Speicherprogramms anzeigt.

5. System nach einem der Ansprüche 1 bis 4, wobei das programmgesteuerte Haushaltsgerät (100) Folgendes umfasst:
einen Signalgeber, der so konfiguriert ist, dass er nach Ablauf des ersten Zeitraums (233) und nach Ablauf jedes der weiteren Zeiträume (234, 235, 236) ein akustisches, visuelles oder haptisches Signal überträgt.

6. System nach einem der Ansprüche 1 bis 5,
wobei die Taste (220) so konfiguriert ist, dass sie die auf der Grundlage eines Betriebszustandes des Haushaltsgeräts (100) vom Benutzer ausgelöste Auswahl des mindestens einen Speicherprogramms insbesondere auf der Grundlage der folgenden Betriebszustände angibt: Gerät aus (200a), Gerät ein (200b), Gerät läuft (200c).

7. Verfahren (300) zum Betreiben eines Systems nach einem der Ansprüche 1 bis 6, wobei das System ein programmgesteuertes Haushaltsgerät (100) und ein drahtloses Endgerät umfasst, wobei das programmgesteuerte Haushaltsgerät (100) auf der Grundlage einer aus einer Taste bestehenden Benutzerschnittfläche (104) betrieben wird, wobei eine Taste (220) des programmgesteuerten Haushaltsgeräts (100) von einer Anwendung App, die auf dem drahtlosen Endgerät läuft, elektronisch emuliert wird, wobei das Verfahren (300) Folgendes umfasst:
Empfangen (301) einer Benutzerinteraktion (111), die von einem Benutzer (110) ausgelöst wird, wobei die Benutzerinteraktion (111) mindestens eines der mehreren Speicherprogramme (P1, P2) angibt, und
Steuern (302) des Betriebs des Haushaltsgeräts (100) gemäß dem mindestens einen durch die Benutzerinteraktion (111) angegebenen Speicherprogramms,
wobei das Steuern (302) das Abrufen des mindestens einen Speicherprogramms aus dem Speicher (103) und als Reaktion auf die gleiche von dem Benutzer (110) ausgelöste Benutzerinteraktion (111) das Starten des abgerufenen Speicherprogramms umfasst, Angeben einer von dem Benutzer ausgelösten Auswahl des mindestens einen unter den mehreren Speicherprogrammen (P1, P2) durch die Benutzerschnittstelle (104),
Angeben der von dem Benutzer ausgelösten Auswahl des mindestens einen Speicherprogramms auf der Grundlage eines Zeitraums (230) zwischen dem Drücken und dem Loslassen der Taste (220) durch die Taste (220), **dadurch gekennzeichnet, dass** ein erster Zeitraum (233) einem ersten bevorzugten Speicherprogramm (203) entspricht und weitere Zeiträume (234, 235, 236) weiteren bevorzugten Speicherprogrammen (204, 205, 206) entsprechen.

8. Computerlesbares, nichtflüchtiges Medium, auf dem Anweisungen gespeichert sind, die, wenn sie von einer Steuerung eines Haushaltsgeräts nach Anspruch 1 ausgeführt werden, bewirken, dass das System nach Anspruch 1 das Verfahren (300) nach Anspruch 7 ausführt.

## Revendications

1. Système comprenant un appareil ménager commandé par programme (100) et un terminal sans fil, dans lequel l'appareil ménager commandé par programme (100) est exploité sur la base d'une interface utilisateur à un bouton (104), l'appareil ménager commandé par programme (100) comprenant :
une mémoire (103) configurée afin d'enregistrer une pluralité de programmes mémorisés (P1, P2) pour l'exploitation de l'appareil ménager (100) selon des configurations spécifiques ;
l'interface utilisateur (104) configurée afin de recevoir une interaction de l'utilisateur (111) initiée par un utilisateur (110), l'interaction de l'utilisateur (111) indiquant au moins un programme mémorisé parmi la pluralité de programmes mémorisés (P1, P2) ; et
un dispositif de commande (105), configuré afin de commander (107) l'exploitation de l'appareil ménager (100) selon l'au moins un programme mémorisé indiqué par l'interaction de l'utilisateur (111),
dans lequel le dispositif de commande (105) est configuré afin d'appeler, au départ de la mémoire (103), l'au moins un programme mémorisé et de lancer le programme mémorisé appelé en réponse à la même interaction de l'utilisateur (111) initiée par l'utilisateur (110), dans lequel l'interface utilisateur (104) est configurée afin d'indiquer une sélection initiée par l'utilisateur de l'au moins un programme mémorisé parmi la pluralité de programmes mémorisés (P1, P2), l'appareil ménager commandé par programme (100) comprenant : un bouton (220), configuré afin d'implémenter l'interface utilisateur (104), dans lequel le bouton (220) est configuré afin d'indiquer la sélection initiée par l'utilisateur de l'au moins un programme mémorisé en fonction d'un intervalle de temps (230) entre l'appui sur le bouton (220) et le relâchement du bouton (220), **caractérisé en ce qu'**un premier intervalle de temps (233) correspond à un premier programme mémorisé préféré (203) et dans lequel des intervalles de temps supplémentaires (234, 235, 236) correspondent à des programmes mémorisés préférés supplémentaires (204, 205, 206) ;
dans lequel le bouton (220) est imité électroniquement par une application ou appli installée sur le terminal sans fil.

2. Système selon la revendication 1,
dans lequel le dispositif de commande (105) est configuré afin d'appeler, au départ de la mémoire (103), l'au moins un programme mémorisé et de lancer le programme mémorisé appelé en réponse à une seule interaction de l'utilisateur (111) initiée par l'utilisateur (100).

3. Système selon la revendication 1 ou 2,
dans lequel le programme mémorisé appelé est lancé en relâchant le bouton (220).

4. Système selon l'une des revendications 1 à 3, dans lequel l'appareil ménager commandé par programme (100) comprend :
un affichage (106) configuré afin d'afficher une configuration de l'au moins un programme mémorisé indiqué par l'interaction de l'utilisateur (111) en appuyant sur le bouton (220).

5. Système selon l'une des revendications 1 à 4, dans lequel l'appareil ménager commandé par programme (100) comprend :
un transmetteur de signal configuré afin de transmettre un signal acoustique, visuel ou haptique après l'écoulement du premier intervalle de temps (233) et après l'écoulement de chacun des intervalles de temps supplémentaires (234, 235, 236).

6. Système selon l'une des revendications 1 à 5,
dans lequel le bouton (220) est configuré afin d'indiquer la sélection initiée par l'utilisateur de l'au moins un programme mémorisé en focntion d'un état de fonctionnement de l'appareil ménager (100), en particulier selon les états de fonctionnement suivants : appareil éteint (200a), appareil allumé (200b), appareil en fonctionnement (200c).

7. Procédé (300) d'exploitation d'un système selon l'une des revendications 1 à 6, dans lequel le système comprend un appareil ménager commandé par programme (100) et un terminal sans fil, dans lequel l'appareil ménager commandé par programme (100) est exploité sur la base d'une interface utilisateur à un bouton (104), dans lequel un bouton (220) de l'appareil ménager commandé par programme (100) est imité électroniquement par une application ou appli installée sur le terminal sans fil, le procédé (300) comprenant :
la réception (301) d'une interaction de l'utilisateur (111) initiée par un utilisateur (110), l'interaction de l'utilisateur (111) indiquant au moins un programme mémorisé parmi la pluralité de programmes mémorisés (P1, P2) ; et
la commande (302) de l'exploitation de l'appareil ménager (100) selon l'au moins un programme mémorisé indiqué par l'interaction de l'utilisateur (111), dans lequel la commande (302) comprend l'appel, au départ de la mémoire (103), de l'au moins un programme mémorisé et le lancement du programme mémorisé appelé en réponse à une même interaction de l'utilisateur (111) initiée par l'utilisateur (110), l'indication d'une sélection initiée par l'utilisateur de l'au moins un programme mémorisé parmi la pluralité de programmes mémorisés (P1, P2) par l'interface utilisateur (104), l'indication par le bouton (220) de la sélection initiée par l'utilisateur de l'au moins un programme mémorisé en fonction d'un intervalle de temps (230) entre l'appui sur le bouton (220) et le relâchement du bouton (220), **caractérisé en ce qu'**un premier intervalle de temps (233) correspond à un premier programme mémorisé préféré (203) et dans lequel des intervalles de temps supplémentaires (234, 235, 236) correspondent à des programmes mémorisés préférés supplémentaires (204, 205, 206).

8. Support non transitoire lisible par ordinateur sur lequel sont stockées des instructions qui, lorsqu'elles sont exécutées par un dispositif de commande d'un appareil ménager selon la revendication 1, font que le système selon la revendication 1 exécute le procédé (300) selon la revendication 7.
